# EUROPEAN PATENT APPLICATION

(11) **EP 2 264 574 A2**
(43) Date of publication of application: **22.12.2010**
(21) Application number: 09723710.1
(22) Date of filing: 03.03.2009
(51) Int. Cl.: G06F 3/042, G06F 3/033

(54) **OPTICAL POINTING APPARATUS AND PORTABLE ELECTRONIC APPARATUS WITH THE SAME**

(30) Priority: 26.03.2008 KR 20080027640; 26.09.2008 KR 20080094483
(71) Applicant: Crucialtec Co., Ltd., Chungcheongnam-do 336-851 (KR)
(72) Inventor: AHN, Keon Joon, Seongnam-si Gyeonggi-do 463-773 (KR); KIM, Jae Dong, Seoul 136-860 (KR); PARK, Sang Il, Seoul 131-813 (KR)
(74) Representative: Habermann, Hruschka & Schnabel
(86) International application number: PCT/KR2009/001019
(87) International publication number: WO 2009/119979

(57) **Abstract**

Disclosed are an optical pointing device and a portable electronic device having the same, in which external noise light and/or noise light due to diffused reflection or the like is prevented from being introduced into an optical sensor, so that precision of operation can be enhanced and a cover forming a housing can have an improved structure. The optical pointing device includes an infrared (IR) source emitting an infrared ray; a cover having a cover plate transmitting the infrared ray so that the infrared ray emitted from the IR source reach an subject out of the cover plate and a cover frame coupled with the cover plate for supporting the cover plate; an optical unit which is provided in the cover and on which the infrared ray reflected from the subject is incident; and an optical sensor sensing the infrared ray incident thereon from the optical unit; wherein the cover plate comprises a base coupled to the cover frame, and an IR band-pass filter layer provided on one side of the base.

## Description

### [Technical Field]

The present invention relates to an optical pointing device and an electronic device having the same, and more particularly to an optical pointing device applicable to a user interface of an electronic device such as a mobile terminal, and a portable electronic device having the same.

### [Background Art]

Generally, an electronic device such as a mobile terminal, personal digital assistant (PDA), etc. uses a user interface based on a key pad.

In more detail, a general portable electronic device includes the key pad formed with a plurality of buttons for inputting numerals, characters or symbols, and thus a user presses the buttons of the key pad so as to input specific data such as a number, a word and the like to the portable electronic device or to select a menu.

Further, the portable electronic device is provided with a display unit, so that data inputted via the key pad and/or information corresponding thereto can be displayed. Recently, in order to support a communication service or an Internet service through the electronic device, a wireless mobile communication service and a wireless Internet service such as wireless broadband (WIBRO) has been commercialized. Also, a portable electronic device such as a mobile phone, a PDA or the like adopts a window operating system such as Windows CE to support a graphic user interface (GUI). Along with the development of communication technology, the portable electronic device provides various additional and supplementary services to a user, and the GUI-based Windows operating system is convenient for the portable electronic device to provide the additional services.

As a user interface for a general electronic device, there is a pointing device such as a mouse, a touch pad, a joystick, or etc. Recently, an optical pointing device, which senses an optical signal varied depending on motion of an subject (e.g., a finger) to move a pointer such as a cursor or to receive input of a command and/or information desired by a user, has been developed and applied to the electronic device.

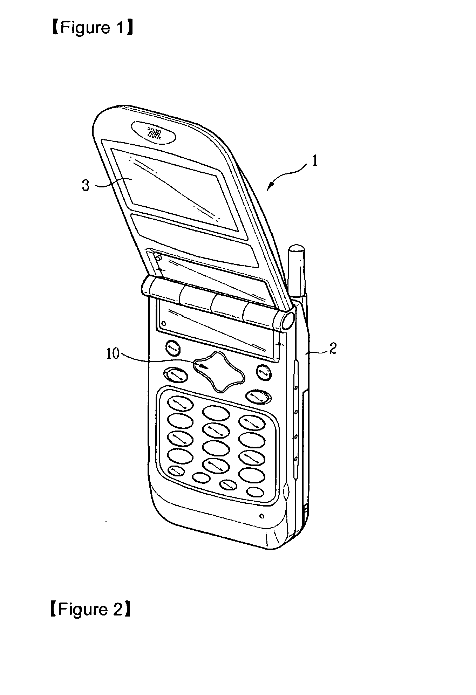

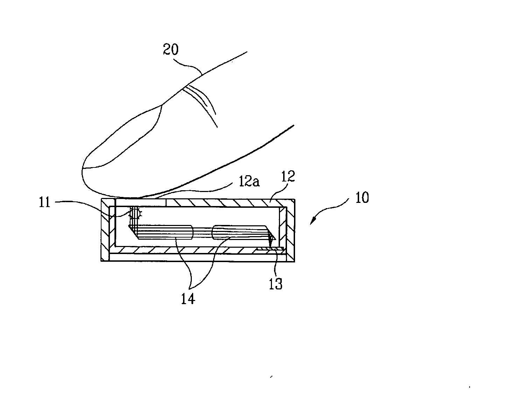

Referring to Figs. 1 and 2, a general optical pointing device 10 includes a light source 11, a cover member 12, an image sensor 13 for sensing an optical signal, and a light guide 14 for guiding light to the image sensor 13.

The optical pointing device 10 may be separately provided from and wirely or wirelessly connected to the electronic device 1, but not limited thereto. Also, the optical pointing device 10 may be directly mounted to a main body 2 of the electronic device 1. Furthermore, in case that the optical pointing device and the electronic device 1 are incorporated as a single body, the optical pointing device preferably has a minimized thickness to make the electronic device 1 slim.

The cover member 12 is formed with a handling surface 12a on an outer side thereof to bring an subject 20 such as a finger or the like into contact with the handling surface 12a in order to operate the electronic device, and the image sensor 13 is provided on a printed circuit board (PCB, not shown) to process an input signal.

Accordingly, if the finger or any subject touches the handling surface 12a and moves on the handling surface 12a, the optical signal input to the image sensor 13 varies depending on motion of the finger, thus the electronic device can be manipulated according to the motion of the finger.

In particular, in the state that the subject 20 is not in contact with the handling surface 12a, light from the light source 11 passes through the cover member 12 and is then externally irradiated. On the other hand, when the subject 20 such as the finger or the like is in contact with the handling surface 12a, the light from the light source 11 is reflected from the subject 20 and then detected by the image sensor 13 via the light guide 14.

In this regard, if the subject 20 being in contact with the handling surface 12a moves, the optical signal reflected from the subject 20 and sensed by the image sensor 13 is also varied. Further, the optical signal sensed by the image sensor 13 is processed by a controller (not shown) having an image processor (not shown), and thus move of the cursor or contents of the input information can be displayed on the display unit 3 of the electronic device 1 according to the motion of the subject, or a menu of contents desired by a user can be selected or characters or numerals can be input to the electronic device.

Meanwhile, since the cover member 12 transmits the light emitted from the light source 11 outward in the state that the subject 20 is not in contact with the handling surface 12a, a user's eye may be fatigued with the glare or feel due to the glare or the user's eyesight may be failing.

Also, if external miscellaneous or noise light based on sunlight or an external illuminator, for example, visible light or ultraviolet light is introduced into the optical pointing device through the cover member 12 and reaches the image sensor, the optical pointing device may malfunction, thereby deteriorating precise control corresponding to the motion of the subject.

Further, when a user touches the surface of the cover member 12 with the subject and moves to manipulate the optical pointing device, friction between the subject and the cover member is so large that the subject moves slow.

### [Disclosure]

### [Technical Problem]

Accordingly, the present invention is directed to an optical pointing device and an electronic device having the same that substantially obviate one or more problems due to limitations and disadvantages of the related art.

An object of the present invention is to provide an optical pointing device and a portable electronic device having the same, in which malfunction of the optical pointing device due to external noise or miscellaneous light is prevented or minimized, and bad influence of a light source upon a user is minimized or prevented.

Another object of the present invention is to provide an optical pointing device which can enhance productivity and have a structure of being easily coated with an infrared band-pass filter layer.

Still another object of the present invention is to provide an optical pointing device improved in functionality and beauty.

Yet another object of the present invention is to provide an optical pointing device in which friction between a subject and a cover is decreased for allowing the subject to move smoothly.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### [Technical Solution]

The achieve foregoing objects and other advantages in accordance with the purpose of the invention, as embodied and broadly described herein, an optical pointing device an electronic device having the same comprising: an infrared (IR) source emitting an infrared ray; a cover having a cover plate transmitting the infrared ray so that the infrared ray emitted from the IR source reach an subject out of the cover plate and a cover frame coupled with the cover plate for supporting the cover plate; an optical unit which is provided in the cover and on which the infrared ray reflected from the subject is incident; and an optical sensor sensing the infrared ray incident thereon from the optical unit; wherein the cover plate comprises a base coupled to the cover frame, and an IR band-pass filter layer provided on one side of the base.

The IR band-pass filter layer comprises an IR band-pass substance coated on an inner surface of the base. And the cover frame comprises a plate seat part on which the cover plate is mounted.

The plate seat part comprises an opening portion and a step portion formed on an edge of the opening portion, the couple plate being seated on the step portion.

In the meantime, the cover plate can be a mirror making an image of an external subject or color plate having a color.

The optical pointing device according to the present invention may further comprise at least one of a character, a symbol, a pattern and a logotype provided to the cover plate. And the cover plate may further comprises an outer plate member provided on an outer side of the base, wherein the at least one of the character, the symbol, the pattern and the logotype is formed at the outer plate member, and wherein the IR band-pass filter layer is provided between the outer plate member and the base.

The cover plate can be divided into an IR permeable zone and a light impermeable zone that prevents the light emitted from an external light source from being introduced into the cover plate.

A handling surface is formed on an outer surface of the cover plate, the subject is contacted on the handling surface, and wherein the cover plate further comprises at least one groove or at least one projection formed on the handling surface.

The handling surface can be divided into an IR permeable zone and a light impermeable zone that prevents the light emitted from an external light source from being introduced into the cover plate, the at least one groove or the at least one projection being formed on the light impermeable zone.

Another aspect of the present invention can be achieved by providing an optical pointing device comprising: an infrared (IR) source emitting an infrared ray; a cover comprising a cover plate transmitting the infrared ray so that the infrared ray emitted from the IR source reach an subject out of the cover plate, wherein the cover plate is a mirror making an image of an external subject or color plate having a color; an optical unit which is provided in the cover and on which the infrared ray reflected from the subject is incident; and an optical sensor sensing the infrared ray incident thereon from the optical unit; wherein the cover plate comprises a base and an IR band-pass filter layer provided on one side of the base.

The optical pointing device may further comprise at least one of a character, a symbol, a pattern and a logotype provided to the cover plate.

The cover plate may further comprises an outer plate member provided on an outer side of the base, wherein the at least one of the character, the symbol, the pattern and the logotype is formed at the outer plate member, and wherein the IR band-pass filter layer is provided between the outer plate member and the base.

The cover plate can be divided into an IR permeable zone and a light impermeable zone that prevents the light emitted from an external light source from being introduced into the cover plate.

A handling surface is formed on an outer surface of the cover plate, the subject is contacted on the handling surface, and the cover plate further comprises at least one groove or at least one projection formed on the handling surface.

And the handling surface is divided into an IR permeable zone and a light impermeable zone that prevents the light emitted from an external light source from being introduced into the cover plate, the at least one groove or the at least one projection being formed on the light impermeable zone.

Still another aspect of the present invention can be achieved by providing an optical pointing device comprising: an infrared (IR) source emitting infrared ray; a cover comprising a cover plate transmitting the infrared ray so that the infrared ray emitted from the IR source reach an subject out of the cover plate; an optical unit which is provided in the cover and on which the infrared ray reflected from the subject is incident; and an optical sensor sensing the infrared ray incident thereon from the optical unit; wherein the cover plate comprises a base, an IR band-pass filter layer provided on one side of the base, and at least one groove or at least one projection formed on a handling surface of the cover plate on which the subject is contacted.

The handling surface can be divided into an IR permeable zone and a light impermeable zone that prevents the light emitted from an external light source from being introduced into the cover plate, the at least one groove or the at least one projection being formed on the light impermeable zone.

The optical pointing device may further comprise at least one of a character, a symbol, a pattern and a logotype provided to the cover plate.

And the cover plate may further comprises an outer plate member provided on an outer side of the base, wherein the at least one of the character, the symbol, the pattern and the logotype is formed at the outer plate member, and wherein the IR band-pass filter layer is provided between the outer plate member and the base.

### [Advantageous Effects]

As described above, an optical pointing device according to the present invention and an electronic device having the same have effects and/or advantages as follows.

First, according to the present invention, eye fatigue is decreased since a light source emits an infrared ray, and external noise light beyond an infrared band is prevented from being introduced into the optical pointing device because a cover includes an infrared band-pass filter layer, so that malfunction of the optical pointing device due to sunlight or external illumination light can be prevented or minimized, thereby enhancing precision of the optical pointing device.

Secondly, according to the present invention, a cover frame and a cover plate separately manufactured and assembled into the cover, so that an infrared pass substance can be easily coated to form an infrared band-pass filter layer and only the cover plate can be replaced when the optical pointing device malfunctions due to scratches of the cover plate or defective coating of the infrared pass substance.

Thirdly, according to the present invention, the cover can be manufactured like a mirror to make an image of an external subject or manufactured to have a color, thereby the optical pointing device may have the various colors and designs to meet a consumer's taste and/or to suit with the electronic device in which the optical pointing device is built. Fourthly, according to the present invention, the cover plate is formed with at least one projection or groove on the outer surface thereof, so that a contact area between an subject and the cover plate can be significantly reduced, thereby decreasing tightness and friction when touched with the subject, allowing the subject to move smoothly and improving the optical pointing device in manipulation.

Fifthly, according to the present invention, it is possible to minimize sweat due to the friction between a finger as the subject and the cover plate, and to prevent operating precision from being deteriorated by diffused reflection of light on the cover plate.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a perspective view of a portable electronic device with an optical pointing device according to the related art;
Fig. 2 is a cross-sectional view showing an internal structure of an optical pointing device to the related art;
Fig. 3 is an exploded perspective view of an optical pointing device according to a first embodiment of the present invention;
   *52
*Fig. 4 is an exploded sectional view showing one embodiment of a cover for the optical pointing device shown in Fig. 3;
Fig. 5 is a sectional view of the cover shown in Fig. 4;
Fig. 6 is a graph showing transmissivity of an infrared band-pass filter layer of the optical pointing device according to the present invention;
Fig. 7 is an exploded perspective view illustrating another embodiment of a cover plate for the optical pointing device according to the present invention;
Fig. 8 is a perspective view of the cover plate shown in Fig. 7;
Fig. 9 is a perspective view of a portable electronic device having an optical pointing device according to an embodiment of the present invention;
Fig. 10 is a sectional view of an exemplary embodiment of a cover for an optical pointing device according to a second embodiment of the present invention;
Figs. 11 and 12 are plan views showing the surface of the cover shown in Fig. 10;
Fig. 13 is a perspective view of an optical pointing device according to a third embodiment of the present invention;
Fig. 14 is a sectional view illustrating a portable electronic device on which the optical pointing device shown in Fig. 13 is mounted; and
Fig. 15 is a perspective view of an optical pointing device according to a fourth embodiment of the present invention.

### [Best Mode]

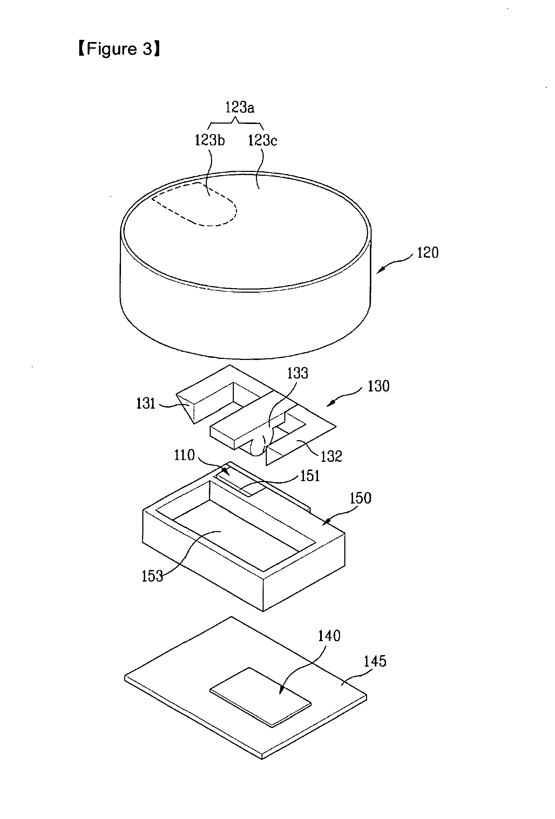

Reference will now be made in detail to the preferred embodiments of the present invention, examples of which are illustrated in the accompanying drawings. Wherever possible, the same reference numbers will be used throughout the drawings to refer to the same or like parts. Firstly, an optical pointing device and a portable electronic device having the same according to a first embodiment of the present invention will be described with reference to Figs. 3 to 9.

Referring to Figs. 3 to 5, an optical pointing device 100 according to the first embodiment of the present invention includes a light source 110, a cover 120 and an optical sensor 140, in which a ray of light emitted from the light source 110 is reflected from an subject out of the cover 120, and the optical sensor 140 senses the ray reflected from the subject.

In this embodiment, the light source 110 includes an infrared ray (IR) source that emits an infrared ray, and the infrared ray emitted from the IR source 110 illuminates the cover 120. Since the IR source 110 emits the infrared ray as compared with a high-brightness light source that emits visible rays, a user's eye is not fatigued even though it is exposed to the IR of the light source 110 for a long time. Here, the IR source 110 may include an infrared light emitting diode (IR LED) module.

And, the cover 120 is formed with a handling surface 123a to manipulate the optical pointing device, and an optical signal of IR reflected from an subject such as a finger or the like which moves on the handling surface 123a is detected by the optical sensor 140. In addition to this configuration, an optical unit 130 is provided in the cover 120, and the infrared ray reflected from the subject outside the cover 120 is incident on the optical unit 130.

At least a portion of the handling surface 123a can transmit the infrared ray emitted from the IR source 110, and the infrared ray emitted from the IR source 110 is reflected from the subject being in contact with the handling surface 123a and then incident on the optical sensor 140 via the optical unit 130.

The optical sensor 140 detects the infrared ray reflected from the subject outside the cover 120 and then transmitted via the optical unit 130. In more detail, the optical sensor 140 is electrically connected to a first circuit board 145 and the subject is imaged on the optical sensor 140 by the infrared ray reflected from the subject.

The optical sensor 140 continuously picks up an image of the subject on the basis of incident light (infrared ray), and computes change in the picked-up image into a displacement value. The displacement value is transmitted to a microcomputer (not shown) of the optical pointing device or the electronic device, and the microcomputer controls motion of a cursor to be displayed on a display screen. The optical sensor 140 includes an imaging area provided with a plurality of pixels, and the light reflected from the subject is incident on the imaging area, thereby picking up the image of the subject. Although it is not shown, a light-shield tape or an optical filter for intercepting miscellaneous light may be attached to the surface of the optical sensor 140.

The optical unit 130 is placed on an optical path of the infrared ray reflected from the subject and traveling toward the optical sensor 140, and thus the infrared ray reflected from the subject is incident on the optical sensor 140 via the optical unit 130. In this embodiment, the optical unit 130 includes an optical member to guide the infrared ray to the optical sensor 140 or have a refraction/reflection function for condensing the infrared ray and/or forming the optical path. The optical unit 130 includes a lens 133, at least one prism 131, 132 for refracting the optical path, etc. Alternatively, the optical unit 130 may include an optical fiber.

In other words, the optical member is not limited to the prisms 131, 132 and a condensing lens 133, and may include a light guide pipe, a reflecting mirror, or the like. Further, the prisms and the condensing lens may be formed as a single body, and the prisms may be not separated but formed as a single body. In this embodiment, the pair of prisms 131 and 132 and the condensing lens 133 are provided as a single body. In the present embodiment, the at least one prism 131, 132 forms the optical path where the infrared ray downwardly reflected from the subject is changed (reflected) to travel in a direction parallel with the handling surface 123a (i.e., in a direction perpendicular to a thickness direction of the optical pointing device), and then reflected to a lower side at which the optical sensor 140 is placed, thereby forming sufficient depth of focus and making the optical pointing device slim according to an embodiment of the present invention.

The optical pointing devices, which have structures to form the optical path on the same principle of forming the foregoing optical path, have been disclosed in PCT International Publication Nos. WO 2006/019218 A1 and WO 2006/011711 A1, etc.

The optical unit 130 is accommodated in a holder 150, and the holder 150 is formed with an accommodating groove 153 to receive the optical unit 130, so that the pair of prisms 131, 132 and the condensing lens 133 are received in the accommodating groove 153.

The IR source 110 may be provided in various positions according to design conditions. In this embodiment, the holder 150 is formed with a light source installation recess 151 at one side thereof for the installation of the IR source 110. At this time, the IR source 110 is coupled to a second circuit board (not shown) and then may be mounted to the light source installation recess 151. The foregoing IR LED module includes an IR LED coupled to the second circuit board to be modularized.

The cover 120 closes the holder 150. The cover 120 of an optical pointing device according to this embodiment has a shape of a substantially circular cap, and includes the handling surface 123a on a top side thereof and an opened bottom. The cover 120 is internally formed with a hollow corresponding to the shape of the holder 150.

The cover 120 is coupled with the holder 150, covers an upper part of the holder 150 to which the IR source 110 and the optical unit 130 are installed, and surrounds a lateral side(s) of the holder 150, thereby protecting the IR source 110 and preventing the optical unit 130 from separation.

And, the first circuit board 145 is coupled to the bottom of the holder 150, and the optical sensor 140 is placed on the top side of the first circuit board 145. The cover 120 is coupled to the holder 150 and minimizes or prevents external noise light from being incident on the optical sensor 140. Alternatively, the first circuit board and the optical sensor may be provided in different positions.

The cover 120 transmits the infrared ray so that the infrared ray emitted from the IR source 110 can reach the subject outside the cover, and effectively intercepts or blocks out miscellaneous or noisy light such as visible rays or the like caused by sunlight or an external light source such as an illuminator such as indoor light, etc. Accordingly, the external miscellaneous light beyond the band of the infrared ray emitted from the IR source 110 is minimized or prevented from reaching the optical sensor 140, so that malfunction of the optical pointing device due to external miscellaneous light can be prevented or minimized.

In the present invention, the cover 120 of the optical pointing device according to an embodiment of the present invention includes a cover plate 122 that transmits the infrared rays so that the infrared rays emitted from the IR source 110 can reach the subject. When the outer surface of the cover plate 122 is touched by the subject, the infrared ray emitted from the IR source 110 is reflected from the subject and then incident on the optical unit 130.

The IR source 110 emits the infrared ray to illuminate the cover 120, more particularly to the inner surface of the cover plate 122, and the outer surface of the cover plate 122 is formed with the handling surface 123a used as a sensing area for the subject. Accordingly, the infrared ray emitted from the IR source 110 passes through the cover plate 122, is then reflected from the subject, is introduced into the inside of the cover 120, and reaches the optical sensor via the optical unit 130. More particularly, it is preferable that the cover plate 122 transmits a band of light that belongs to an infrared band, specifically, a wavelength band of the infrared ray emitted by the IR source. Furthermore, the outer surface of the cover plate 122 forming the handling surface 123a may be planar or curved.

Accordingly, the cover plate 122 preferably blocks out the rays of other bands not belong to band of the infrared ray and transmits the infrared rays only, in order for this the cover plate 122 includes a base 123 and an infrared band-pass filter layer 124 provided at one side of the base 123. In this embodiment, the base 123 covers the upper part of the holder 150, and the infrared band-pass filter layer 124 may be a thin coating layer provided at one side of the base 123.

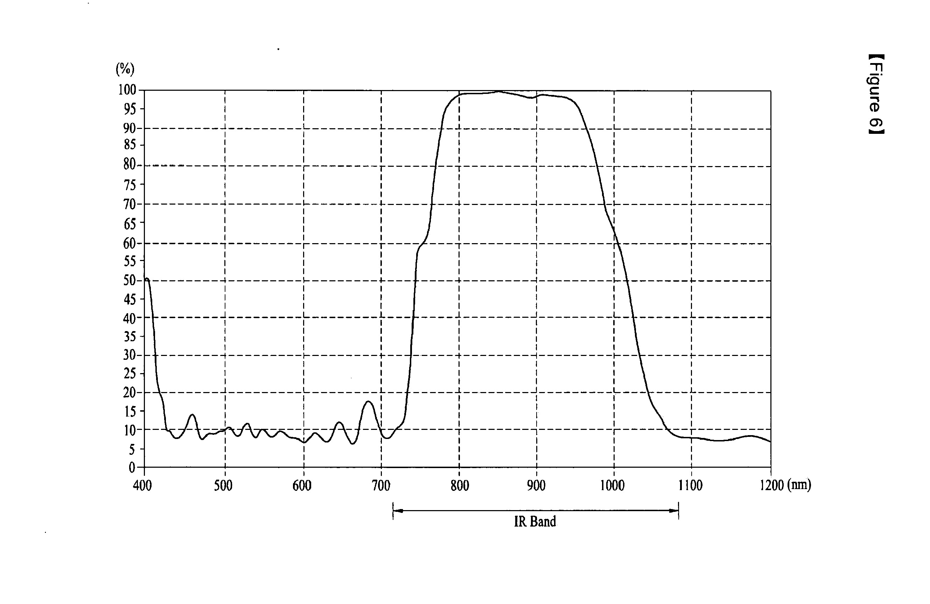

The infrared band-pass filter layer 124 serves as an infrared band-pass filter (IR BPF) and is provided on one side of the base 123, so that as shown in Fig. 6, it can pass the infrared ray emitted from the IR source 110 but reject or attenuate outside the rays beyond the infrared band.

To form the infrared band-pass filter layer 124 at the cover plate, according to this embodiment, one side, i.e., the inner surface of the base 123 is coated with an infrared band-pass substance, e.g., an infrared pass resin, infrared pass paint, or the like. Thus, the infrared band-pass filter layer 124 can block out or attenuate the external miscellaneous light of a predetermined band but substantially transmits light of an infrared wavelength band.

In more detail, the infrared band-pass filter layer 124 may include coating layer formed by coating the inner surface of the base 123 with a high-refraction material and a low-refraction material such as TiO₂ and SiO₂ or TiO₅ and SiO₂, etc., in which TiO₂ and TiO₅ are used as the high-refraction material and SiO₂ is used as the low-refraction material. Furthermore, the infrared pass substance may be formed as a multi-layered thin film coated by a vacuum deposition method using a vacuum deposition device or the like. Besides the above described material or coating method, the infrared band-pass filter layer 124 may be formed by various infrared band-pass coating methods for reflecting shortwave light of the visible band but transmitting long-wave light of the infrared (IR) band, which can be applied to the cover plate. Such a band-pass coating method itself is a general technique in the field of an optical filter but not applied to the field of optical pointing device.

Accordingly, as shown in Fig. 6, the cover plate 122 including the base 123 and the infrared band-pass filter layer 124 substantially passes only the IR band, thereby preventing or minimizing the malfunction of the optical pointing device due to the external light source.

Alternatively, the base 123 may be injection-molded using an optical plastic material that passes only the IR band. However, in this case, there are many problems that material costs for forming the base 123 are increased, a defective product causes much loss of costs, and so on. Thus, the infrared band-pass filter layer 124 is preferably formed on the base 123.

In this embodiment, the base 123 is made of tempered glass, but not limited thereto. Alternatively, general glass or plastics that can transmit not only infrared rays but also visible rays may be usable as long as it can pass the IR band. Further, the tempered glass may be transparent or colored according to design conditions.

Meanwhile, the cover plate 122 may be divided into an IR permeable zone and a light impermeable zone. The IR permeable zone 123b passes the IR band but rejects or attenuates the other band, and the light impermeable zone 123c blocks out the light from the external light source.

The light impermeable zone 123c fully cuts off the light transmission so that the infrared rays and the rays of the other band can be completely prevented from being introduced into the cover 120. Thus, the light emitted from the IR source 110 passes through only the IR permeable zone 123b and reaches the subject.

The handling surface 123a to be touched with the subject may be divided into the IR permeable zone 123b that passes the IR band only, and the light impermeable zone 123c that rejects the light fully.

for this, the bottom of the IR permeable zone 123b is coated with the foregoing infrared pass substance to form the infrared band-pass filter layer 124, and the light impermeable zone 123c is coated with a light-shielding paint to thereby fully blocks the light. Here, the infrared band-pass filter layer 124 may be provided on only the bottom of the IR permeable zone 123b or on the whole bottom of the cover plate.

Alternatively, the cover plate 122 may be divided into the IR permeable zone 123b and the light impermeable zone 123c by double molding using different kinds of plastics. For example, transparent glass is given to a part of the base 123 corresponding to the IR permeable zone 123b, and a light blocking material is given to a part corresponding to the light impermeable zone 123c, so that the base 123 can be formed by double molding.

Further, a coating material (not shown) for preventing a scratch is applied to the outer surface of the base 123. The coating material may include a ultraviolet (UV) resin or various materials.

In the meantime, the cover plate 122 is configured to reflect an image of an external subject like a mirror or have a color. In other words, since the cover plate 122 is partially or wholly exposed to the outside, it is manufactured like a mirror or color plate having a color in light of beauty of design. To make the cover plate 122 like a mirror, for example, a mirror film for reflecting the external subject is provided on the outer or inner surface of the base 123, so that a reflected image of the external subject can be made on the mirror film.

The mirror film may include a half mirror having predetermined transmissivity and reflectivity to transmit some light, particularly, the infrared ray and the ray of some visible band and reflect the other some light, like a mirror film attached to a liquid crystal display of a mobile phone, a digital camera, etc.

Alternatively, one side of the base 123 may be provided with a mirror unit made of a liquid crystal display that alternates between a reflective state and a transmissive state according to apply of voltage, and thus the base 123 may serve as a mirror to make a reflected image of the external subject.

Furthermore, metal such as nickel may be deposited as a thin layer on one side of the base 123 and form a metal deposition layer, thereby making the base 123 like a mirror. Besides, the infrared band-pass filter layer 124 itself may transmit the infrared ray and reflect some light to function as both the mirror and the infrared band-pass filter with predetermined transmissivity and reflectivity.

As an example of giving a color to the base 123, a color coating layer (not shown) having a certain color suitable for design condition and transmitting the infrared ray may be provided on one side of the base 123, so that the base 123 can have the certain color by the color coating layer.

In the case that the color coating layer is provided on the inner surface of the base 123, the color coating layer may be formed on the inner surface of the base 123 and then the infrared band-pass filter layer 124 may be coated on inner side of the color coating layer. The color coating layer may be provided as a thin film layer formed by coating colored dyes, pigments, etc. on the outer or inner surface of the base 123.

Therefore, the certain color of the color coating layer causes the base 123 to have the certain color, thereby enhancing the beauty of the optical pointing device according to the present invention.

Alternatively, the cover plate 122 may be coated with a thermochromatic material of which color is varied depending on change in temperature, and thus the cover plate 122 may be changed in color according to temperatures.

Also, the infrared band-pass filter layer 124 may have a color by containing materials or particles capable of reflecting rays of a predetermined visible band.

In a conventional case, because a material forming the infrared band-pass filter has a dark color, beauty or design of the electronic device is deteriorated and selection of color is difficult. On the other hand, according to an embodiment of the present invention, a portion or the whole of the color plate 122 can have a color or serve as a mirror corresponding to the design of the portable electronic device to which the optical pointing device is applied, thereby improving the design of the portable electronic device. The whole or at least a portion of the cover plate 122, for example, only the handling surface 123a may serve as a mirror or have a color. In more detail, the permeable zone 123b may function as a mirror or have a color.

In the meantime, the color plate 122 may be provided with at least one of a character, a symbol, a logotype, and other pattern. Furthermore, the outer surface of the cover plate, more particularly, the handling surface 123a may be formed with at least one projection or at least one groove as described in the second to fourth embodiments of the optical pointing device according to the present invention.

That is, the outer surface of the cover plate 122, forming the handling surface 123a, may be formed with at least one projection or at least one groove.

As described above, if the handling surface 123a is divided into the IR permeable zone 123b that passes the IR band and the light impermeable zone 123c blocking the infrared ray and the ray of other band, it is preferable that the at least one groove or the at least one projection is formed on the light impermeable zone 123c.

The cover 120 may further includes a cover frame 121 to which the cover plate 122 is installed and coupled, and the cover frame 121 supports the cover plate 122. The cover frame 121 and the cover plate 122 may be formed as a single body, but in this embodiment they are separately made or molded and then assembled.

In other words, the cover plate 122 is made separately from the cover frame 121, and the cover plate 122 is coupled to the cover frame 121 after being coated with the infrared band-pass filter layer. Alternatively, after the cover plate 122 and the cover frame 121 are assembled, the infrared band-pass filter layer may be coated on inner or outer side of the cover plate 122. The cover plate 122 may be coupled to the cover frame 121 by various methods such as an epoxy resin, a double-sided tape, etc. Also, to stably seat the cover plate 122, the cover frame 121 has a plate seat part.

As described above, if the cover plate 122 and the cover frame 121 are separately made, it is easy to coat the infrared band-pass filter layer 124 on the inner surface of the cover plate 122 and defectives can be remarkably reduced.

In this embodiment, as shown in Fig. 3, the cover 120 is shaped like a substantially circular cap having an opened bottom, and the cover frame 121 forms a rim surrounding the periphery of the holder. However, the shape of the cover 120 is not limited thereto.

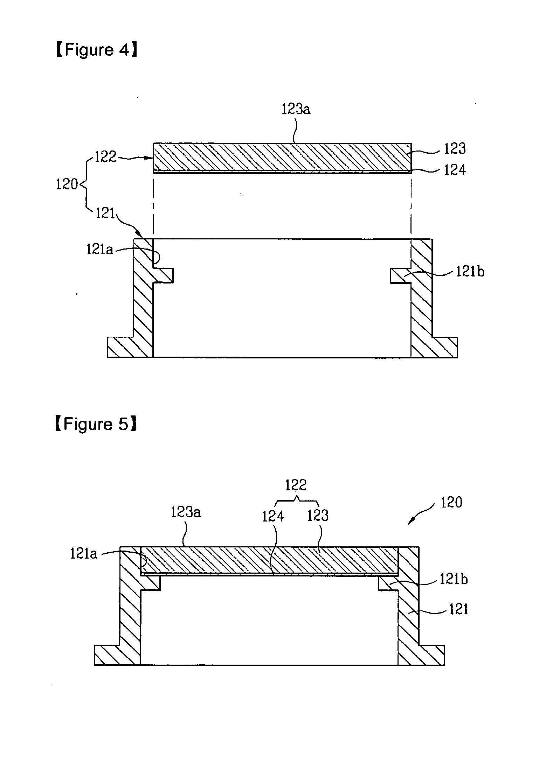

Referring to Figs. 4 and 5, the plate seat part of the cover frame 121 includes an opening portion 121a, and a step 121b for the stable seat of the cover plate 122. The step 121b is formed along the edge of the opening portion 121a, and the edge portion of the cover plate 122 is stably seated on the step 121b.

The cover plate 122 may be attached to the step 121b of the cover frame 121 by an epoxy resin (not shown), a double-sided tape (not shown), etc. Also, the cover plate 122 may be made of tempered glass having the same shape as the opening portion 121a of the cover frame 121, and the step 121b is formed along the rim of the opening portion 121a and supports the cover plate 122, in which the depth of the step 121b is substantially equal to the thickness of the cover plate 122.

Meanwhile, said characters, symbols, patterns, logotypes, etc. may be provided on the inner or outer surface of the cover plate 122, or embedded within the cover plate 122 as described in this embodiment.

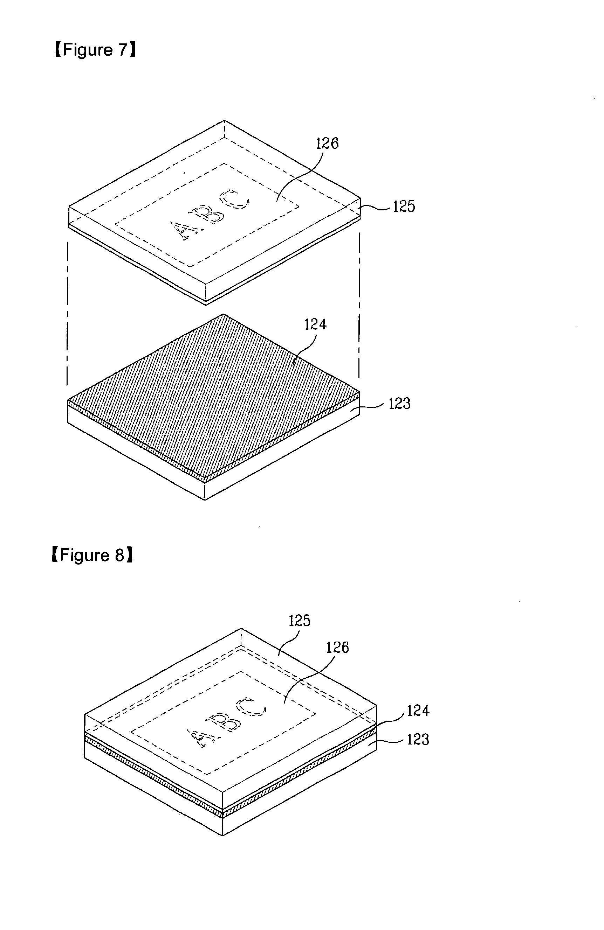

Referring to Figs. 7 and 8, the cover plate 122 further includes an outer plate member 125 provided to the outer surface of the base 123, wherein at least one of the character, the symbol, the pattern and the logotype and can be printed on an inner surface of outer plate member 125. Also, the infrared band-pass filter layer 124 may be provided between the outer plate member 125 and the base 123.

And, the epoxy resin is applied to or the double-sided tape is attached to at least one of the base 123 and the outer plate member 125, and then the base 123 and the outer plate member 125 are coupled to each other. Preferably, the epoxy resin or the double-sided tape has not to be adhered to the character 126, the symbol, the pattern, the logotype, etc.

Like this embodiment, if the outer plate member 125 is provided on the outer surface of the base 123, the handling surface 123a is formed on the outer surface of the outer plate member 125.

Although it is not shown, without the outer plate member 125 provided on the outer surface of the base 123, at least one of the character, the symbol, the pattern and the logotype may be printed on the outer surface of the base 123 and the infrared band-pass filter layer 124 may be provided on the inner surface of the base 123.

According to the optical pointing device having the foregoing configuration, the infrared ray emitted from the IR source 110 passes through the base 123 and the infrared band-pass filter layer 124 and then is reflected from the subject and introduced into the cover 120.

On the other hand, sunlight or light of a predetermined wavelength band emitted from an external illuminator, for example, UV or the visible ray is blocked by the infrared band-pass filter layer 124 and/or the light impermeable zone 123c, and therefore it is prevented or minimized that the external miscellaneous light reaches the optical sensor 140, thereby enhancing operating precision according to motion of the subject. Furthermore, the infrared ray reflected into the cover 120 from the subject is incident on an incident surface of a first prism 131 of the pair of prisms, travels through the condensing lens 133, and then exits through an exit surface of a second prism 132, thereby reaching the optical sensor 140 provided on the bottom of the holder 150. Thus, motion of a cursor or a pointer and the like can be displayed on the screen of the portable electronic device (to be described later) in response to an electrical signal varied depending on the infrared ray incident on the optical sensor 140.

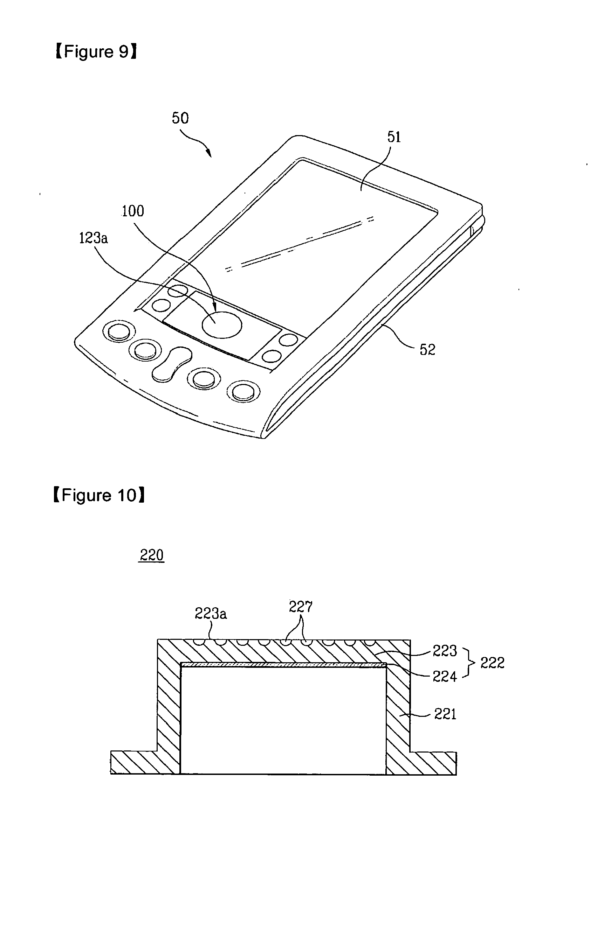

Fig. 9 illustrates a PDA as an example of the electronic device with an optical pointing device according to an embodiment of the present invention.

A portable electronic device 50 includes an electronic device main body 52 having a display unit 51, and an optical pointing device 100. The optical pointing device 100 is provided integrally with the electronic device main body 52, and the electronic device main body 52 is internally provided with a main circuit board (not shown) and various electrical components.

Accordingly, if a user moves his/her finger on the handling surface 123a of the optical pointing device 100, the pointer or the cursor moves on the screen of the display unit 51 in accordance with the motion of the finger, so that desired operations such as selecting of characters, numerals or a menu, pointing a certain icon, etc. can be carried out.

*130In this embodiment, the PDA is disclosed as an example of the portable electronic device, but the portable electronic device is not limited thereto. Alternatively, the portable electronic device according to the present invention may include various electronic devices such as a mobile terminal, a navigation system, a remote controller, etc.

### [Mode for Invention]

Other embodiments of the optical pointing device according to the present invention will be described with reference to Figs. 10 to 14. Next, an optical pointing device according to a second embodiment of the present invention will be described with reference to Figs. 10, 11 and 12.

Like the first embodiment, the optical pointing device according to this embodiment includes a light source, an optical sensor and a cover, and the cover is internally provided with an optical unit. The light source, the optical sensor and the optical unit may have the same configurations as those of the first embodiment and various conventional things, and thus repetitive descriptions thereof will be avoided. For convenience, the light source, the optical unit and the optical sensor are indicated by like reference numerals used for those of the first embodiment.

In this embodiment, the outer surface of the cover 220 touched by the subject is formed with at least one groove 227. In more detail, the cover 220 includes the cover plate 222 to be touched by the subject, and the outer surface of the cover plate 222 to be touched by the subject is formed with at least one groove 227 or at least one projection. In the present embodiment, the cover 220 is disclosed, of which the outer surface of the cover plate 122 is formed with at least one groove 227.

The at least one groove 227 minimizes a contact area between the cover 220 and the subject, and reduces friction with a finger as the subject. Thus, the finger is smoothly and quickly movable, thereby improving the optical pointing device in manipulation. That is, the at least one groove 227 decreases the contact area between the subject and the cover 220, more particularly, the outer surface of the base 223 of the cover plate 222, so that friction can be minimized while moving the subject (the finger), thereby allowing the optical pointing device to be softly and smoothly manipulated with a less force. And the at least one groove 227 may be provided on the handling surface 223a formed on the cover plate 222, i.e., the outer surface of the base 223.

In the case that there is a protective coating for protecting the outer surface of the cover plate 222, the friction increases and thus the tightness increases when touched by the subject. Even in this case, the at least one groove 227 allows the subject to move softly. As an example of the coating layer, there are a UV coating, etc. Also, the at least one groove 227 reduces the friction between the subject and the cover plate, thereby minimizing contamination of the control pad with sweat due to friction heat. Furthermore, the at least one groove 227 not only reduces the contact area between the finger (the subject) and the handling surface 223a but also allows air to flow through a space formed by the at least one groove 227, thereby more effectively discharging heat due to the friction with the subject. Accordingly, sweat from the finger decreases, so that contamination on the handling surface 223a by the sweat can be minimized, and it can be thus prevented that light passing through the cover plate 222 is diffused and reflected by a foreign material and performance of the optical pointing device is deteriorated.

In this embodiment, a plurality of dot-shaped grooves 227 are regularly or irregularly arranged on the handling surface 223a, but not limited thereto. If one or more elongated long groove is provided in the type of lattice, spiral and zigzag or the like on a the handling surface 223a, air can flow along the groove 227 even though the subject is in contact with the handling surface 223a, thereby easily discharging the friction heat and minimizing or preventing the contamination of the handling surface 223a due to sweat of the finger.

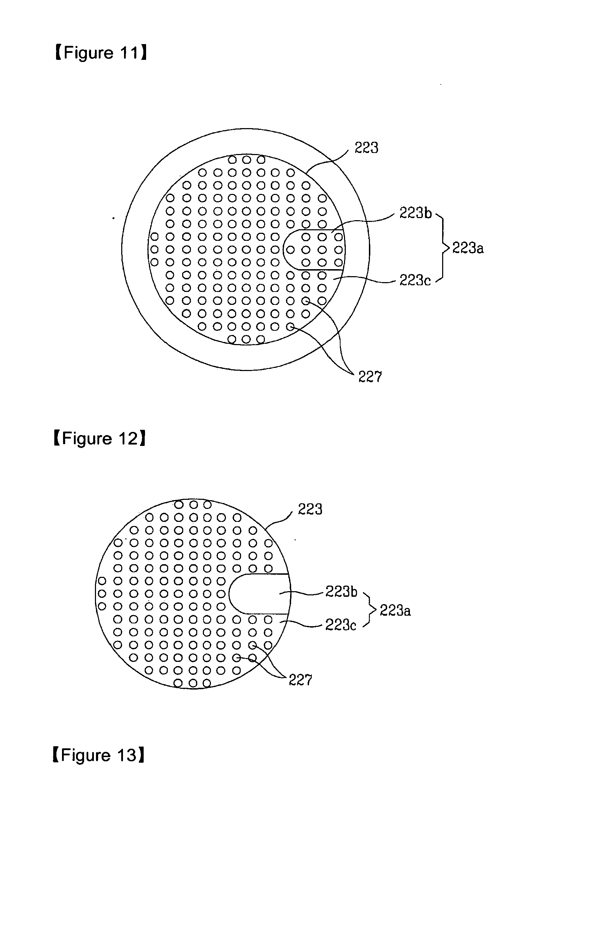

The cover plate 222 transmits the infrared ray so that the infrared ray emitted from the IR source 110 can reach the subject. Referring to Figs. 11 and 12, the cover plate 222 is divided into an IR permeable zone 223b that passes the IR band and a light impermeable zone 223c that blocks the infrared ray and the ray of other band. In more detail, the handling surface 223a is divided in to the IR permeable zone 223b and the light impermeable zone 223c.

The IR permeable zone 223b and the light impermeable zone 223c may have the same function and configurations as those of the first embodiment. The at least one groove 227 may be formed on both the IR permeable zone 223b and the light impermeable zone 223c as shown in Fig. 11, but preferably formed only on the light impermeable zone 223c as shown in Fig. 12 to prevent the diffused reflection of the infrared ray.

In the optical pointing device according to this embodiment, it is minimized that the infrared ray emitted from the IR source 110 is diffused and reflected by the contamination of the handling surface 223a and the performance of the optical pointing device is deteriorated.

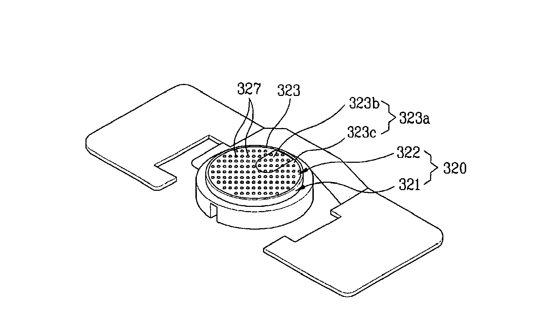

Referring to Figs. 13 to 15, third and fourth embodiments of the optical pointing device according to the present invention includes a cover 320 formed with at least one projection 327 on an outer surface thereof to be touched by an subject. The cover 320 is internally provided with an optical unit 330. The optical unit 330 includes a prism 331, 332, and a condensing lens 333 and is accommodated in a holder 350.

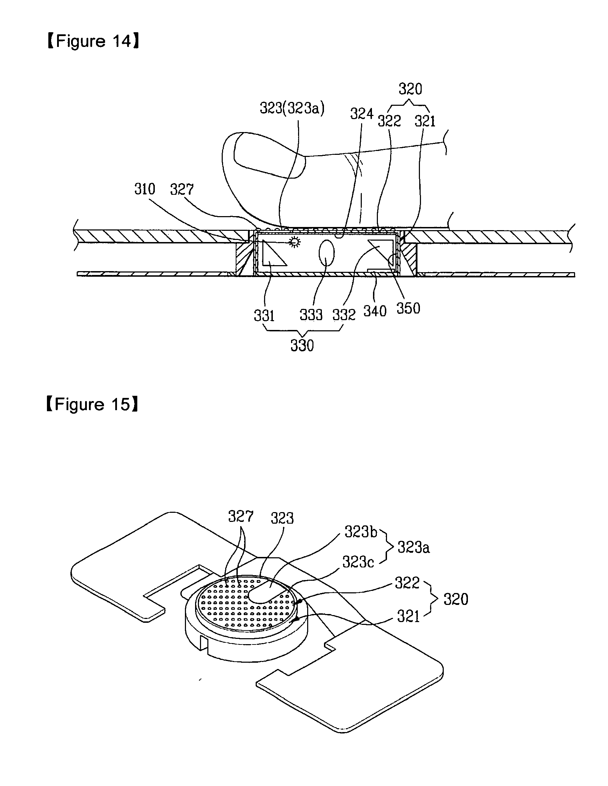

Fig. 13 is a perspective view of an optical pointing device according to a third embodiment of the present invention, Fig. 14 is a sectional view illustrating a portable electronic device on which the optical pointing device shown in Fig. 13 mounted, and

Fig. 15 is a perspective view of an optical pointing device according to a fourth embodiment of the present invention.

The cover 320 includes a cover plate 322 to be touched by an subject, and the cover plate 322 is formed with a handling surface 323a on an outer surface thereof to be touched by the subject. The handling surface 323a is formed with the at least one projection 327.

Furthermore, a circuit board is provided on the bottom of the holder 350, and an optical sensor 340 for sensing light reflected from the subject is provided on the circuit board. The at least one projection 327 minimizes a contact area between the cover 320 and the subject, and reduces friction with a finger as the subject. Thus, the finger is softly and smoothly movable, thereby improving the optical pointing device in manipulation. That is, the at least one projection 327 significantly decreases the contact area between the subject and the cover 320, specifically, the subject and the outer surface of the base 323 of the cover plate 322, so that tightness and friction can be minimized while moving the subject (the finger), thereby allowing the optical pointing device to be softly and smoothly manufactured with a less force. To this end, the at least one projection 327 may be provided on the handling surface 323a formed on the cover plate 322, i.e., the outer surface of the base 323.

Further, the at least one projection 327 not only reduces the contact area between the finger (the subject) and the handling surface 323a but also allows air to flow through a space formed by the at least one projection 327, thereby more effectively discharging heat due to the friction with the subject. Accordingly, sweat from the finger decreases, so that the sweat contamination on the handling surface 323a can be minimized, and it can be thus prevented that light passing through the cover plate 322 is diffused and reflected by a foreign material and performance of the optical pointing device is deteriorated.

In the present embodiment, a plurality of dot-shaped projections 327 are regularly arranged on the handling surface 323a, but not limited thereto. Further, if one or more elongated long groove is provided in the form of lattice, spiral and zigzag or the like on a the handling surface 323a, air can flow along a trench or gully between the projections 327 even though the subject is in contact with the handling surface 323a, thereby easily discharging the friction heat and minimizing or preventing the contamination of the handling surface 323a due to sweat of the finger.

The cover plate 322 transmits the infrared ray so that the infrared ray emitted from the IR source 110 can reach the subject. Further, the cover plate 322 is divided into an IR permeable zone 323b that passes the IR band and a light impermeable zone 323c that intercepts or blocks out the infrared ray and the ray of other band. In more detail, the handling surface 323a is divided in to the IR permeable zone 323b and the light impermeable zone 323c.

The IR permeable zone 323b and the light impermeable zone 323c may have the same function and configurations as those of the first embodiment. The at least one groove 327 may be formed on both the IR permeable zone 323b and the light impermeable zone 323c as shown in Fig. 13, but preferably formed only on the light impermeable zone 323c as shown in Fig. 15 to prevent the diffused reflection of the infrared ray.

The cover plates 222, 322 according to the second to fourth embodiments may have the same configurations as the cover plate 122 described in the foregoing first embodiment. For example, the cover plate 222, 322 includes the base 223, 323 and the infrared band-pass filter layer 224, 324, in which the base 223, 323 and the infrared band-pass filter layer 224, 324 have the same configurations as those described in the first exemplary embodiment. Further, other configurations of the first embodiment, which are not described in these embodiments, may be equally applied to the covers of these embodiments. Thus, the cover plate 222, 322 may serve as a mirror or have a color, and may be provided with a character, a symbol, a logotype, etc.

In addition, the cover 220, 320 includes a cover frame 221, 321 to support the cover plate 222, 322. Figs. 10 to 15 illustrate the cover where the cover frame 221, 321 and the cover plate 222, 322 are formed as a single body, but not limited thereto. Alternatively, the cover plate 222, 322 and the cover frame 221, 321 may be separately made like those of the first embodiment and then coupled to each other.

Although a few embodiments of the present invention have been shown and described, It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### [Industrial Applicability]

As apparent from the above description of the optical pointing device and the electronic device having the same, the IR source is used as the light source, so that a problem of eye fatigue or eyesight fail can be removed and at the same time malfunction of the optical pointing device due to sunlight or external illuminative light can be prevented or minimized, thereby enhancing precision of the optical pointing device.

Furthermore, according to the present invention, manufacture work is easy, for example, the infrared pass substance can be easily coated to form the infrared band-pass filter layer, and so on. Also, the cover serves as a mirror to produce a reflected image of an external subject, and has a color, thereby having various colors and designs to meet a consumer's taste.

Also, according to an exemplary embodiment of the present invention, the subject can softly and smoothly move on the cover, so that manipulation can be improved.

## Claims

1. An optical pointing device comprising:
an infrared (IR) source emitting an infrared ray;
a cover having a cover plate transmitting the infrared ray so that the infrared ray emitted from the IR source reach an subject out of the cover plate and a cover frame coupled with the cover plate for supporting the cover plate;
an optical unit which is provided in the cover and on which the infrared ray reflected from the subject is incident; and
an optical sensor sensing the infrared ray incident thereon from the optical unit;
wherein the cover plate comprises a base coupled to the cover frame, and an IR band-pass filter layer provided on one side of the base.

2. The optical pointing device according to claim 1, wherein the IR band-pass filter layer comprises an IR band-pass substance coated on an inner surface of the base.

3. The optical pointing device according to claim 1, wherein the cover frame comprises a plate seat part on which the cover plate is mounted.

4. The optical pointing device according to claim 3, wherein the plate seat part comprises an opening portion and a step portion formed on an edge of the opening portion, the couple plate being seated on the step portion.

5. The optical pointing device according to claim 1, wherein the cover plate is a mirror making an image of an external subject or color plate having a color.

6. The optical pointing device according to claim 1, further comprising at least one of a character, a symbol, a pattern and a logotype provided to the cover plate.

7. The optical pointing device according to claim 6, wherein the cover plate further comprises an outer plate member provided on an outer side of the base, wherein the at least one of the character, the symbol, the pattern and the logotype is formed at the outer plate member, and wherein the IR band-pass filter layer is provided between the outer plate member and the base.

8. The optical pointing device according to claim 1, wherein the cover plate is divided into an IR permeable zone and a light impermeable zone that prevents the light emitted from an external light source from being introduced into the cover plate.

9. The optical pointing device according to claim 1, wherein a handling surface is formed on an outer surface of the cover plate, the subject is contacted on the handling surface, and wherein the cover plate further comprises at least one groove or at least one projection formed on the handling surface.

10. The optical pointing device according to claim 9, wherein the handling surface is divided into an IR permeable zone and a light impermeable zone that prevents the light emitted from an external light source from being introduced into the cover plate, the at least one groove or the at least one projection being formed on the light impermeable zone.

11. An optical pointing device comprising:
an infrared (IR) source emitting an infrared ray;
a cover comprising a cover plate transmitting the infrared ray so that the infrared ray emitted from the IR source reach an subject out of the cover plate, wherein the cover plate is a mirror making an image of an external subject or color plate having a color;
an optical unit which is provided in the cover and on which the infrared ray reflected from the subject is incident; and
an optical sensor sensing the infrared ray incident thereon from the optical unit;
wherein the cover plate comprises a base and an IR band-pass filter layer provided on one side of the base.

12. The optical pointing device according to claim 11, further comprising at least one of a character, a symbol, a pattern and a logotype provided to the cover plate.

13. The optical pointing device according to claim 12, wherein the cover plate further comprises an outer plate member provided on an outer side of the base, wherein the at least one of the character, the symbol, the pattern and the logotype is formed at the outer plate member, and wherein the IR band-pass filter layer is provided between the outer plate member and the base.

14. The optical pointing device according to claim 11, wherein the cover plate is divided into an IR permeable zone and a light impermeable zone that prevents the light emitted from an external light source from being introduced into the cover plate.

15. The optical pointing device according to claim 11, wherein a handling surface is formed on an outer surface of the cover plate, the subject is contacted on the handling surface, and the cover plate further comprises at least one groove or at least one projection formed on the handling surface.

16. The optical pointing device according to claim 15, wherein the handling surface is divided into an IR permeable zone and a light impermeable zone that prevents the light emitted from an external light source from being introduced into the cover plate, the at least one groove or the at least one projection being formed on the light impermeable zone.

17. An optical pointing device comprising:
an infrared (IR) source emitting infrared ray;
a cover comprising a cover plate transmitting the infrared ray so that the infrared ray emitted from the IR source reach an subject out of the cover plate;
an optical unit which is provided in the cover and on which the infrared ray reflected from the subject is incident; and
an optical sensor sensing the infrared ray incident thereon from the optical unit;
wherein the cover plate comprises a base, an IR band-pass filter layer provided on one side of the base, and at least one groove or at least one projection formed on a handling surface of the cover plate on which the subject is contacted.

18. The optical pointing device according to claim 17, wherein the handling surface is divided into an IR permeable zone and a light impermeable zone that prevents the light emitted from an external light source from being introduced into the cover plate, the at least one groove or the at least one projection being formed on the light impermeable zone.

19. The optical pointing device according to claim 17, further comprising at least one of a character, a symbol, a pattern and a logotype provided to the cover plate.

20. The optical pointing device according to claim 19, wherein the cover plate further comprises an outer plate member provided on an outer side of the base, wherein the at least one of the character, the symbol, the pattern and the logotype is formed at the outer plate member, and wherein the IR band-pass filter layer is provided between the outer plate member and the base.
